(19) Europäisches Patentamt

European Patent Office

Office européen des brevets

(11) Publication number: **0 519 542 A1**

## (12) EUROPEAN PATENT APPLICATION

(21) Application number: **92201591.2**

(22) Date of filing: **03.06.92**

(51) Int. Cl.⁵: **C11B 7/00**, C11C 3/10, C11B 3/00, A23D 9/00

(30) Priority: **17.06.91 EP 91305462**

(43) Date of publication of application:
**23.12.92 Bulletin 92/52**

(84) Designated Contracting States:
**AT BE CH DE DK ES FR GB GR IT LI NL PT SE**

(71) Applicant: **UNILEVER N.V.**
**Weena 455**
**NL-3013 AL Rotterdam(NL)**

㊾ **BE CH DE DK ES FR GR IT LI NL PT SE AT**

(71) Applicant: **UNILEVER PLC**
**Unilever House Blackfriars P.O. Box 68**
**London EC4P 4BO(GB)**

㊾ **GB**

(72) Inventor: **Davies, John, Unilever Research**
**Colworth Lab.**
**Colworth House**
**Sharnbrook, Bedford MK44 1LO(GB)**
Inventor: **Moore, Harry, Unilever Research**
**Colworth Lab.**
**Colworth House**
**Sharnbrook, Bedford MK44 1LO(GB)**
Inventor: **Rawlins, Christopher, Unilever Res.**
**Colworth Lab.**
**Colworth House**
**Sharnbrook, Bedford MK44 1LO(GB)**

(74) Representative: **Tan, Bian An, Ir. et al**
**Unilever N.V. Patent Division P.O. Box 137**
**NL-3130 AC Vlaardingen(NL)**

(54) **Combined fractionation, refining and interesterification process.**

(57) The invention is concerned with a combined fractionation, refining and interesterification process, wherein the crucial step is the fractionation of a fat fraction,containing free fatty acids at a temperature between -5 and -30°C. As a result of this fractionation, an intermediate product is obtained that is rich in SOO-type triglycerides, wherein saturated fatty acids are also present. This intermediate product is very suited as a starting material for an enzymic conversion process for preparing SOS-type triglycerides.
However, this intermediate fraction can also be used for the preparation of a fat fraction with 60-80 wt.% of SOO-type triglycerides.

EP 0 519 542 A1

Fractionation processes of vegetable oils are well known in the literature. Especially wet fractionations wherein an organic solvent such as a hydrocarbon, e.g. hexane, or a ketone like acetone is used, are described at some length. In these common wet fractionatons, two stages are often applied : a first fractionation at about 10-25°C and a second fractionation at about -5 to +5°C. In this way, three fractions can be obtained from the most conventional vegetable fats : a first fraction containing most of the saturated triglycerides (represented as $S_3$ , S = saturated fatty acid residue), commonly referred to as the stearin fraction, a second fraction containing most of the unsaturated triglycerides (represented as $U_3$ , U = unsaturated fatty acid residue), commonly referred to as the olein fraction, and a third fraction, which is rich in $S_2U$-type triglycerides, commonly referred to as the mid-fraction.

Although the preferred fraction is the mid-fraction, because of the fact that it can be applied as a cocoa butter substitute, the other fractions can also be used somehow or other.

Refining processes of triglyceride-containing compositions are also well known in the prior art. In general, the refining processes can be split up into physically refining processes wherein part of the composition is removed by a physical process, e.g. by adsorption or absorption, and into chemically refining processes wherein part of the glyceride system is converted by a chemical reaction.

Physical refining processes often use bleaching earth to remove oxidized fats, colour entities and enzyme-poisoning compounds etc. by acid treatment and adsorption. Fatty acids and odours are removed by distillative methods.

Chemical refining processes are described wherein, in particular, fatty acids are removed as soaps after neutralization. Partial glycerides can be removed from triglyceride compositions under the influence of an enzyme that is specific for partial glycerides whereas triglycerides are not affected by it.

Esterification processes for the preparation of glycerides are well known in the literature. Very common are esterification processes, including transesterification, interesterification and conventional esterification, wherein a base, e.g. sodium methanolate, is used as a catalyst. In this way, only fully randomized products can be obtained. Since the publication of our first patent on enzymatic interesterification in 1977, the use of this method has found wide application in the field of the triglyceride chemistry in order to synthesize fat compositions with a desired triglyceride composition, particularly for the production of symmetric triglycerides.

One of the remaining problems associated with this type of glyceride conversions is, however, the yield of the triglyceride composition envisaged.

We have now found a new process by which a significantly higher yield of the most desirable product (= SUS) can be obtained.

Another advantage of our new process resides in that it can also be used to prepare SUU-type triglycerides in high yields. Moreover, our process is more natural than the processes wherein additional fatty acids are to be used, because in our process it is possible to use no, or at least much fewer, additional fatty acids than in the processes of the prior art.

The above-mentioned objects can be achieved by carrying out the process according to the invention, comprising a process for the fractionation/refining/interesterification of a vegetable fat composition wherein the process involves at least a combination of three of the following reaction steps, of which step e) is imperative :

a) Degumming of the fat;
b) Fractionation of the fat at -5 to +10°C, with removal of a stearin and an olein fraction;
c) Refining of the olein fraction of b);
d) Conversion of the diglycerides to free fatty acids present in the olein fractions of b) or c);
e) Fractionation of the fat,containing free fatty acids at -5 to -30°C, preferably -10 to -15°C, with removal of an olein fraction which is rich in unsaturated fatty acids, unsaturated triglycerides (= $U_3$) and triterpene alcohol esters (= TTAE) and of a stearin fraction which is rich in saturated fatty acids and $SU_2$-type triglycerides;
f) Enzymatic interesterification of the stearin fraction of e);
g) Recycling of at least part of the product of step f) to step b) or to a step prior to step b);
h) Removal of the free fatty acids from the stearin fraction from e) or from the crude product of f);
i) Fractionation of the refined fraction of step h) with removal of a fraction rich in SUS triglycerides and an olein fraction;
j) Recovering of the fraction which is rich in SUS triglycerides obtained in h).
k) Recycling of the olein fraction of i) to step d) and/or e).

The vegetable fats that can be applied in this process are, in theory, unlimited although, in practice, shea fat, sal fat, palm oil, soybean oil, high oleic sunflower oil are used. Of these fats, the shea fat is preferred because in that case very high yields of StOSt (St = stearic acid, O = oleic acid) can be obtained.

The different steps of the process can be performed in the following ways :

The degumming of step a) can be performed in a conventional manner for each of the different triglyceride compositions.

The fractionation step b) is performed in order to split the original fat into a stearin fraction containing mainly the more saturated triglycerides and into an olein fraction containing the rest of the vegetable fat composition, i.e. the diglycerides, the other triglycerides, the TTAE and any free fatty acids that may be added to the process in subsequent reaction steps, of which at least part of the product is recycled. This fractionation can be carried out as a wet fractionation, using a hydrocarbon, e.g. hexane or petroleum ether, or a ketone, e.g. acetone or ethyl methyl ketone, as a solvent. The solvent is used in an amount of 1-10 weight parts per weight part of fat, in particular in 3-6 weight parts per weight part.

The solution obtained after the mixing of solvent and fat is cooled to -5 to $+10\,^{\circ}$C, whereupon the stearin is separated from the olein-containing solvent fraction. After removal of the solvent, e.g. by distillation, the olein fraction is obtained. In this way, 25-80 wt.%, in particular 50-75 wt.% of the triglycerides are obtained as the stearin fraction and 75-20 wt.%, in particular 25-50 wt.% of the triglycerides are obtained as the olein fraction. In addition to triglycerides, the olein fraction contains partial glycerides, the TTAE and the bulk of the free fatty acids present in the feedstock to the fractionation.

The physical refining step c) can be used to remove enzyme-poisoning compounds and possibly also some of the partial glycerides.

A very convenient way of proceeding is to use a combination of citric acid treatment and bleaching earth treatment, which is in fact a conventional technique.

Step d) is meant to convert all, or nearly all, the diglycerides present in the fat composition to free fatty acids. In this step, the triglyceride composition, in particular the olein fraction of step b), which has optionally been refined in step c), is subjected to an enzymatic treatment, using an enzyme that is specific for the hydrolysis of partial glycerides, in particular diglycerides, into free fatty acids and glycerol. This treatment is known in literature (cf. JP 62 000 287), in which examples of the enzymes that can be used, are also mentioned. The product of this treatment only contains the triglycerides, the TTAE's and the free fatty acids liberated in this step or already present in the starting material for this step.

The fractionation step e) is in fact the key step of our new process. In this fractionation step, the vegetable fat composition, also containing free, saturated and unsaturated fatty acids, is separated into an olein fraction which is rich in unsaturated triglycerides, unsaturated fatty acids and triterpene alcohol esters ($=$ TTAE) and other low-melting constituents, and into a stearin fraction which is rich in saturated acids and $SU_2$-type triglycerides. In this step e), the vegetable fat is preferably mixed with a hydrocarbon, e.g. hexane or petroleum ether, or with a ketone, e.g. acetone or methyl ethyl ketone. The weight of solvent to weight of triglyceride ratio can vary from 1-10, preferably from 3-6. The solution so obtained is cooled to -5 to $-30\,^{\circ}$C, preferably -10 to $-15\,^{\circ}$C. As a result of this cooling, not only are the triglycerides split up into a fraction which is rich in unsaturated triglycerides ($= U_3$) and a fraction which is rich in $SU_2$-type triglycerides, but also the free fatty acids are separated into saturated fatty acids participating in the stearin fraction, and into unsaturated fatty acids which are present in the olein fraction. As a result of this fractionation, the $SU_2$-containing fraction, wherein the saturated free fatty acids are also present, is an ideal starting point for an enzymatic esterification, using a 1.3-specific enzyme. Optionally extra free saturated fatty acid can be added to this composition if not enough of the acid is present for a subsequent enzymatic conversion.

This product can, however, also be subjected to a process for the removal of the free fatty acids, e.g. by steam distillation or by methanol extraction. In this way, a product which is rich in SUU can be obtained, which can be used in chocolate fat compositions in order to soften the fat.

In the cold fractionation about 30-75 wt.% of the triglycerides are obtained as the olein fraction, whereas 70-25 wt.% of the triglycerides are obtained as the stearin ($= SU_2$-containing) fraction.

It should be mentioned here that a combined degumming and low-temperature (i.e. -30 to $+5\,^{\circ}$C) fractionation of shea is known from GB 1,511,617. However, the shea used did not contain free fatty acids. Therefore, our process, wherein also the free fatty acids present in the fat fraction are fractionated, is not known from this reference.

As has been pointed out above, the stearin fraction of step e) is an ideal composition to act as starting material for an enzymatic interesterification reaction, using a 1.3-specific enzyme in order to convert the $SU_2$ glyceride into the most desired SUS triglyceride.

These reactions are very well known (cf. GB 1 577 933). All techniques and enzymes mentioned therein can be applied, resulting in the conversion of $SU_2$ into SUS.

Therefore, the crude reaction product of this conversion contains large amounts of SUS in addition to free fatty acids and some diglycerides formed during this enzymatic conversion (about 1-10 wt.%). This

EP 0 519 542 A1

crude product can be recycled (partly or completely) to an earlier stage in the combined process, preferably a recycling to step b) is performed. In that case, the most efficient use is made of this product, resulting in a product having a very high SUS content in a high yield. However, it is also possible to recycle this crude product to another stage of the process, so long as it is introduced before step e) is performed.

It is also possible to subject the crude product of step f) to a refining wherein the free fatty acids are removed, e.g. methanol extraction or steam distillation. The product obtained from this last-mentioned process can then be fractionated, resulting in triglyceride fractions with the desired composition, of which one or more fractions could be recirculated, while the fraction that is rich in SUS is recovered as the reaction product.

This process is very advantageous, starting from shea fat, resulting in products that are rich in StOSt. It is particularly preferred to carry out a reaction sequence formed by steps a), b), d) and e) (in that order), after which the stearin fraction of e) is deacidified. This process is particularly useful, starting from shea fat, resulting in a composition with more than 60 wt.% of StOO.

Another preferred sequence of reaction steps is formed by steps a), b), d), e), f), h), i) and j) (in that order). This results in the highest purity and the highest yields of the SUS product.

In order to improve the purity of the product, incorporation of the refining step c) in our process is preferred.

Another part of the invention is formed by the products that are obtainable according to the process described above.

In this way, an StOO product can be obtained that has the following triglyceride composition (silver phase HPLC chromatography) :

$S_3$ < 1.5 wt.%; SOS = 5-15 wt.%; SSO = 2-8 wt.%;

Slin S = 4-10 wt.%; SOO = 60-80 wt.%; others 5-20 wt.%,

wherein S = saturated fatty acids ($\geqq C_{16}$, preferably $C_{16}/C_{18}$); O = oleic acid, Lin = linoleic acid.

This product is very useful as softener in chocolate compositions that are too hard.

## EXAMPLE

A quantity of shea butter was taken up into solution in five times its own weight of acetone and was degummed by cooling the solution to 30°C, at which point the gum was precipitated and removed by centrifugation.

The miscella was then cooled further to 2°C, at which temperature a crystalline, solid phase was produced. This stearin fraction was removed by filtration. The composition of the liquid oil phase ( = olein) was as follows :

triglycerides : 51.9 wt.%; free fatty acids : 24.3 wt.%; diglycerides : 14.2 wt.% and triterpene alcohol esters: 9.6 wt.%.

The triglyceride component, analysed by silver phase HPLC, had the following composition :

| SSS | SOS | SSO | Slin S | SOO | Others |
|-----|-----|-----|--------|-----|--------|
| 0 | 8.2 | 2.5 | 4.6 | 55.1 | 29.6 |

This olein fraction was partially refined by washing with a citric acid solution and treating it with an acetic bleaching earth at 90°C. The bleaching earth was removed by filtration.

The diglycerides present in the olein were then converted into free fatty acids by treatment with a lipase, which specifically hydrolyses partial glycerides ( = mono- and diglycerides) to free fatty acids and glycerol. For this conversion, 0.02 kg of enzyme per kg of olein was dissolved in 0.2 kg of water per kg of olein, to which a citrate buffer was added to maintain a pH of 5.0. The oil was treated with the solution by agitation for 8 hours at 40°C and was washed free of glycerol and enzymes.

The olein was then fractionated by dissolving it in 4 parts of its own weight of acetone; this solution was cooled to -15°C and the solid fraction was removed from the liquid fraction by filtration. The yield of the stearin phase was 54% and the olein and stearin fractions had the following compositions ;

4

|  | FFA | DG's | TG's | TTAE |
|---|---|---|---|---|
| Olein fraction | 45.2 | 1.6 | 21.3 | 31.9 |
| Stearin fraction | 25.4 | 0.5 | 72.7 | 1.4 |

The triglycerides in these fractions had the following compositions :

|  | SSS | SOS | SSO | Slins | SOO | Others |
|---|---|---|---|---|---|---|
| Olein | 0 | 1.0 | 0.8 | 1.2 | 22.7 | 74.3 |
| Stearin | 0 | 9.9 | 4.5 | 6.3 | 64.3 | 15.0 |

The stearin thus produced was fed continuously through a packed bed reactor containing a catalyst comprising a 1,3-specific lipase supported on a macro-porous particulate material. The reaction product was analysed and found to be very rich in StOSt.

| SSS | SOS | SSO | SlinS | SOO | Others |
|---|---|---|---|---|---|
| 2.2 | 43.9 | 3.7 | 5.9 | 34.0 | 10.3 |

Such a reaction product can be readily deacified and fractionated to produce a fraction which is extremely rich in StOSt and is an eminently suitable component for coconut butter equivalents. Alternatively, the reaction product can be blended with incoming fresh shea oil, either before or after degumming, and fractionated **in situ,** to bring about a net overall increase in shea stearin yield.

## Claims

1. Process for the fractionation/refining/interesterification of a vegetable fat composition, the process involving at least a combination of three of the following steps, of which step e) is imperative :
   a) Degumming of the fat;
   b) Fractionation of the fat at -5 to +10°C, with removal of a stearin and an olein fraction;
   c) Refining of the olein fraction of b);
   d) Conversion of the diglycerides to free fatty acids present in the olein fractions of b) or c);
   e) Fractionation of the fat,containing free fatty acids at -5 to -30°C, preferably -10 to -15°C, with removal of an olein fraction which is rich in unsaturated fatty acids, unsaturated triglycerides and triterpene alcohol esters and of a stearin fraction which is rich in saturated fatty acids and $SU_2$-type triglycerides;
   f) Enzymatic interesterification of the stearin fraction of e);
   g) Recycling of at least part of the product of step f) to step b) or to a step prior to step b;
   h) Removal of the free fatty acids from the stearin fraction from e) or from the crude product of f);
   i) Fractionation of the refined fraction of step h) with removal of a fraction rich in SUS triglycerides and an olein fraction;
   j) Recovering of the fraction which is rich in SUS triglycerides obtained in h).
   k) Recycling of the olein fraction of i) to step d) and/or e).

2. Process according to Claim 1, wherein the vegetable fat is chosen from the group consisting of shea fat, sal fat, palm oil, soybean oil, high oleic sunflower oil.

3. Process according to Claims 1 and 2, wherein the vegetable fat is shea fat, the following reactions steps being applied in the order mentioned : a), b), d) and e), after which the stearin fraction from e) is deacidified and a fat fraction containing at least 60 wt.% of StOO triglyceride is obtained.

4. Process according to Claim 1 or 3, wherein the stearin fraction of step e) is subjected to enzymatic interesterification according to step f) and the product of step f) is deacidified and fractionated with removal of the triglycerides which are rich in StOSt.

**5.** Process according to Claims 1-4, wherein additional free, saturated fatty acid is added to the interesterification of step f).

**6.** Process according to Claims 1-5, wherein the interesterification of step f) is performed by using a 1.3-specific enzyme.

**7.** Process according to Claims 1-6, wherein the cold fractionation of step e) is a wet fractionation, using a hydrocarbon, preferably hexane, or a ketone, preferably acetone, as a solvent.

**8.** Process according to Claim 1 or 3, wherein the following reaction sequence is applied : a), b), d), e), f), h), i) and j).

**9.** Process according to Claims 1, 3 and 8, wherein the olein fraction of step i) is recycled to the fractionation step d).

**10.** Process according to Claims 1, 3 and 8, wherein step d) is performed by using an enzyme, specific for the hydrolysis of diglycerides.

**11.** Process according to Claims 1, 3 and 8, wherein step d) is preceded by a refining according to step c).

**12.** Process accoridng to Claim 11, wherein the refining of step c) is performed by using citric acid and bleaching earth.

**13.** Product containing StOO triglyceride, characterized by the following triglyceride compositions:

$S_3$ < 1.5 wt.%; SOS = 5-15 wt.% SSO = 2-8 wt.%;
Slin S = 4-10 wt.%; SOO = 60-80 wt.%; others 5-20 wt.%

wherein S = saturated fatty acid ($\geq C_{16}$); O = oleic acid, Lin = linoleic acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | GB-A-1 511 617 (FUJI OIL COMPANY LIMITED)<br>* page 3; table 3 *<br>* claims 1-15; examples 2,3 *<br>--- | 1,2,7 | C11B7/00<br>C11C3/10<br>C11B3/00<br>A23D9/00 |
| Y | EP-A-0 185 524 (UNILEVER PLC)<br>* claims 1-10; example *<br>* page 8; table *<br>--- | 1,2,7 | |
| Y | EP-A-0 245 076 (UNILEVER PLC)<br>* claims 1-3,5-14 *<br>* page 4; table 1 * | 1,2,7 | |
| A | --- | 4-6,13 | |
| A | EP-A-0 093 602 (UNILEVER NV)<br>* claims 1,16,17,23,24; examples 2,3 *<br>--- | 1,2,4-7 | |
| A | US-A-4 103 039 (FUJI OIL COMPANY)<br>* claims 1-5; examples 1,3 *<br>--- | 1,2,7 | |
| A | EP-A-0 130 487 (ASAHI DENKA KOGYO K.K.)<br>* page 21, paragraph 2 - page 27, paragraph 1; claims 1,4; examples 1-3,9 *<br>--- | 1,2,7 | TECHNICAL FIELDS SEARCHED (Int. Cl.5) |
| A | GB-A-2 084 170 (BLOHORN S A)<br>* claims 1-7 *<br>--- | 1,2,7 | C11B<br>C11C<br>A23D |
| A | WORLD PATENTS INDEX<br>Section Ch, Week 7805,<br>Derwent Publications Ltd., London, GB;<br>Class E, AN 78-09199A<br>& JP-A-52 151 306 (KANEGAFUCHI CHEM KK) 15 December 1977<br>* abstract *<br>----- | 1,2 | |

The present search report has been drawn up for all claims

| Place of search | Date of completion of the search | Examiner |
|---|---|---|
| THE HAGUE | 17 JULY 1992 | DEKEIREL M.J. |